Europäisches Patentamt

(19) European Patent Office

Office européen des brevets

(11) **EP 1 117 568 B1**

(12) **EUROPEAN PATENT SPECIFICATION**

(45) Date of publication and mention
of the grant of the patent:
**14.01.2004 Bulletin 2004/03**

(21) Application number: **99954563.5**

(22) Date of filing: **27.09.1999**

(51) Int Cl.⁷: **B60R 21/20**, B62D 1/11

(86) International application number:
**PCT/SE1999/001703**

(87) International publication number:
**WO 2000/018617 (06.04.2000 Gazette 2000/14)**

(54) **VEHICLE STEERING-WHEEL ARRANGEMENT**

FAHRZEUGLENKRADANORDNUNG

SYSTEME DE VOLANT POUR VEHICULE

(84) Designated Contracting States:
**DE FR GB**

(30) Priority: **30.09.1998 SE 9803314**

(43) Date of publication of application:
**25.07.2001 Bulletin 2001/30**

(73) Proprietor: **Volvo Personvagnar AB
405 31 Göteborg (SE)**

(72) Inventors:
• **FOSSE, Tore
S-416 52 Göteborg (SE)**
• **SASLECOV, Venti
S-416 58 Göteborg (SE)**

(74) Representative: **Andersson, Per Rune
Albihns Göteborg AB
Box 142
401 22 Göteborg (SE)**

(56) References cited:
**EP-A1- 0 691 245        EP-A1- 0 796 770
WO-A1-97/41006        WO-A1-98/34826
US-A- 5 480 184**

## Description

### TECHNICAL FIELD

The present invention concerns an arrangement for a vehicle steering-wheel, according to the preamble to the following claim 1.

### STATE OF THE ART

A conventional vehicle steering-wheel normally comprises a hub which is firmly fixed to the upper part of the vehicle steering column plus a number of spokes which are fixed to the hub. The spokes connect the rim of the steering-wheel to the hub. According to known technology, the hub is normally cast in aluminium. The spokes are made as items from flat steel or round steel which are cast into the hub. The rim is made from round steel, which in turn is cast integral with the spokes.

Today's vehicle steering-wheels are often equipped with an airbag module i.e. a special unit which consists of an inflatable airbag, a gas generator, a bracket intended for fixing to the hub of the steering-wheel plus a casing which encloses the airbag and the gas generator. The gas generator is in turn connected to an acceleration sensor which in a known manner is arranged to detect if the vehicle in question is experiencing an abnormally strong retardation. If this is the case, the acceleration sensor sends a signal to the gas generator which, in turn, is activated to inflate the airbag.

According to known technology, vehicle production includes a stage where the separate airbag module is installed and fixed adjacent to the hub of the steering-wheel.

A disadvantage of such a method of construction is that it has relatively high weight and space requirements, which result from the arrangement of the abovementioned airbag module in the hub of the steering-wheel. Naturally, these factors are in conflict with the general demands in a vehicular context, where as little weight and space as possible for the components which are installed in the vehicle are desirable. In connection with steering systems for vehicles, a low weight and a high moment of inertia for the fitted components are especially desirable.

Due to the installation of an airbag module in the hub of the vehicle steering-wheel based on known technology, the total weight of the vehicle is thus increased which, in turn, leads to an increase in fuel consumption. In addition, an increased weight leads also to an increased sensitivity in the steering-wheel to torsional vibrations (i.e. vibrations in the direction of rotation) in the steering-wheel, which in turn can be caused by possible wheel imbalance during operation of the vehicle. This leads to a deterioration in the level of comfort especially for the driver of the vehicle who, of course, is holding the steering-wheel while driving.

An increased weight in the steering-wheel also results in the natural frequency for the bending of the steering-wheel structure (i.e. wheel and steering column) being reduced. In unfavourable cases this can result in the bending natural frequency getting to a level where vibrations and perturbations in the steering-wheel are increased, which also contributes to a deterioration in the level of comfort.

For today's vehicles it is, in addition, desirable to give the vehicle steering system energy absorbing properties. The reason for this is primarily that it is desirable to give a driver a certain degree of protection if he is thrown against the steering-wheel in the event of a collision because he is not using a seat belt. This requirement concerning the energy absorption by the steering-wheel applies also in the case where the driver is using a seat belt. In the latter case, account must be taken of the fact that the driver in certain driving conditions can actually hit the steering-wheel as a result of a collision even if he is secured with a seat belt. This can happen, for example, if the driver has the seat placed well forward or if the seat belt has an abnormal amount of slack.

Consequently there is a requirement for the steering system to be designed so that it absorbs the energy released in the event of a collision. According to known technology, this energy absorption can be achieved by making the steering-wheel with spokes which can be deformed and which give way. This means that the lower part of the rim of the steering-wheel i.e. the part which is nearest to the driver's chest, can give way and bend down when it comes into contact with the driver in the event of a collision. The energy is absorbed during this downward bending.

However, a disadvantage with such known constructions is that they do not give the desired effect if a collision happens when the steering-wheel is turned, for example, by a half revolution, which is exactly the case when taking a bend. The spokes which can be deformed have then been moved into a position relative to the driver which is not optimal for the appropriate energy absorption, which can lead to the desired function failing.

US 5 480 184 A discloses an arrangement for a steering wheel according to the preamble of claim 1.

The patent document WO 98/34826 teaches an arrangement for a steering wheel, having a hub, spokes and a bowl-shaped element, said components being integrally constructed in one single material piece.

### DESCRIPTION OF THE INVENTION

A principal objective of the present invention is the provision of an improved arrangement for a vehicle steering-wheel, which in particular contains an airbag, which allows for a design with a very effective utilization of the available space, a low weight and a high degree of comfort. This objective is achieved by means of an arrangement, the characteristics of which are made dear in the following claim 1.

The arrangement according to the invention comprises a hub for fixing to a steering column, a bowl-shaped element connected to the hub with at least one spoke which connects the said bowl-shaped element to a steering-wheel rim, the hub, the bowl-shaped element and the spokes being integrally formed as a single material item. The invention is adapted so that the bowl-shaped element constitutes a casing which encloses an airbag and a means for inflating the airbag in the event of a collision involving the vehicle. The invention is characterized in that a wall section of the said-bowl-shaped element forms, at least partly, a part of the said means for inflating the airbag.

According to the invention, a steering-wheel structure is obtained which contributes to reduced vehicle weight and an optimal use of the space adjacent to the steering-wheel hub. Furthermore, there is no need for a separate airbag module to be installed in the steering-wheel hub. Instead, the components in the form of an airbag and an associated gas generator are packed directly into the said'bowl-shaped element adjacent to the steering-wheel hub, such that the wall of the steering-wheel bowl also forms a part of the gas generator.

An additional objective of the invention is to provide a high degree of comfort for the driver of the vehicle. In order to achieve this objective, the invention, according to a preferred embodiment, is made in such a way that the airbag is arranged so that a major part of its mass extends along the inner periphery of the said bowl-shaped element. In this way, an increase in the moment of inertia of the steering-wheel is obtained. This in turn makes the steering-wheel less sensitive to vibrations which, for example, can occur as a consequence of torsion oscillations in the steering-wheel system. Such oscillations can in turn occur, for example, as a consequence of wheel imbalance. This weight distribution which is achieved according to the embodiment also gives a lower torsion natural frequency, which in turn leads to a lower risk of possible vibrations and other mechanical disturbances in the steering-wheel interacting with and being increased by the natural frequency of the steering system.

In addition, the invention provides for effective energy absorption in the event of a collision. In particular, a uniform, i.e. symmetrical, energy absorption can be obtained in the event of force exerted on the steering-wheel in the event of a collision involving the vehicle in question. This means that the vehicle's driver receives the same protection irrespective of how much the steering-wheel has been turned at the moment of collision. This contributes to a more optimal energy absorption capacity in the arrangement according to the invention.

Advantageous embodiments of the invention are disclosed in the following dependent patent claims.

DESCRIPTION OF THE FIGURES

The invention is described in more detail in the following by reference to an example of a preferred embodiment and the appended drawings, in which:

Figure 1      shows a perspective view of a vehicle steering-wheel which is intended to be used in connection with the present invention;

Figure 2      shows a side view of the said vehicle steering-wheel along its axis of symmetry, and

Figure 3      shows a side view of an arrangement according to the invention, which comprises an airbag and a gas generator.

PREFERRED EMBODIMENT

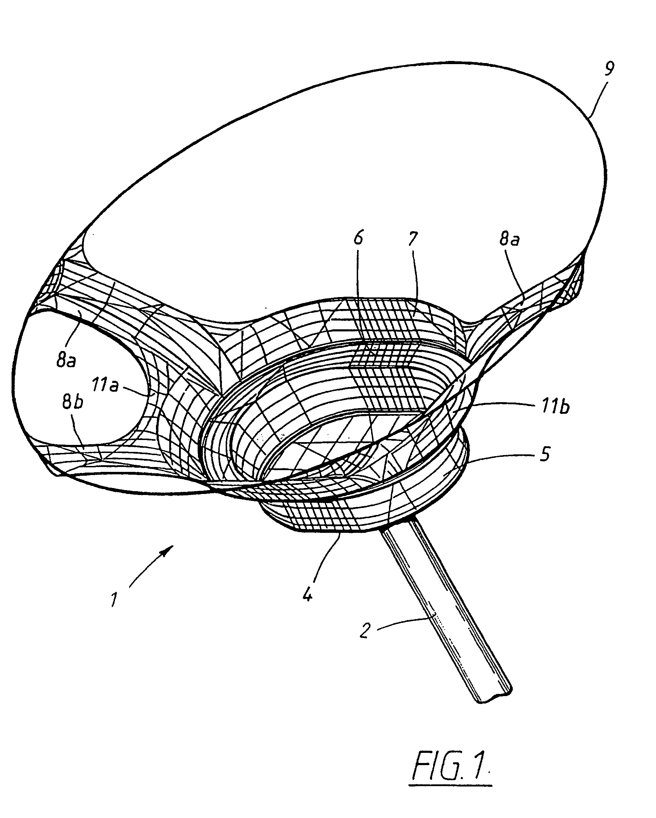

The basic design of an arrangement according to the present invention, which in particular can be used in a vehicle, is shown in Figure 1. Thus, in Figure 1, a vehicle steering-wheel 1 is shown which, according to a preferred embodiment, is arranged in association with a steering system. More precisely, the steering-wheel 1 is fixed onto a steering column 2. It should be noted that Figure 1 shows only the framework of the steering-wheel 1, and that this is intended to be covered with a padding material and covered in a customary manner.

The steering-wheel 1 is built up of an essentially bowl-shaped and shell-like element, in the bottom part of which is incorporated a hole where the steering column 2 is attached. The bottom part of the shell thus forms a hub 4 for the steering-wheel 1. The shell can be produced by casting, for example, steel or aluminium, but can be produced suitably also from, for example, composites. The shell can also be produced by so called hydro forming, which is an established method where water is used for pressing the shell.

As shown in Figure 1, the hub 4 is essentially oval in shape, seen from above. The shape of the hub 4 is adapted as required to suit the final appearance of the steering-wheel 1 and can of course also be, for example, circular.

The steering-wheel 1 is made so that the hub 4 merges with a lower part of the shell 5 extending round the imaginary longitudinal axis of the steering column 2. Furthermore, the lower part of the shell 5 merges with a ledge 6 with radial extension in relation to the said axis. The ledge 6 merges in its turn with an upper part 7 of the shell. In this way, a bowl-shaped and shell-like structure is formed, in which the upper part of the shell 7 has greater outer dimensions than the lower part 5 of the shell. According to what will be clarified in detail below, the dimensions of parts 5, 7 of the shell and the ledge 6 are chosen to give the steering-wheel 1 its desired properties concerning, for example, energy absorption, natural frequency, strength and weight. In addition, according to what will be described below, the parts 5,6 7 form a bowl-shaped element which preferably is arranged so that it encloses the components associated with a safety system which comprises an airbag (not shown in Figure 1).

The upper part 7 of the shell merges at certain predetermined places merges with a number of elements which form spokes for the steering-wheel 1. The number of spokes can vary, but in accordance with the embodiment the steering-wheel 1 has four such spokes distributed along the circumference of the shell, more precisely two upper spokes 8a and two lower spokes 8b. The lower spokes 8b are the spokes which are intended to be positioned closest to the driver of the vehicle. Spokes 8a, 8b merge in their turn with a steering-wheel rim 9, which, as is the custom, is essentially circular. The steering-wheel rim 9 is preferably formed as a pipe or a solid ring. In the production of the steering-wheel 1, the whole shell including the spokes 8a, 8b and the steering-wheel rim 9 is preferably cast as a single piece. Since such a casting can be made in a single process stage, the invention implies a cost effective production method.

Although the term "spokes" has been used in this context, these elements are made as an integrated part of the shell, more precisely a part projecting from the upper part 7 of the shell. Consequently, the spokes 8a, 8b are not separate items to be installed on the shell.

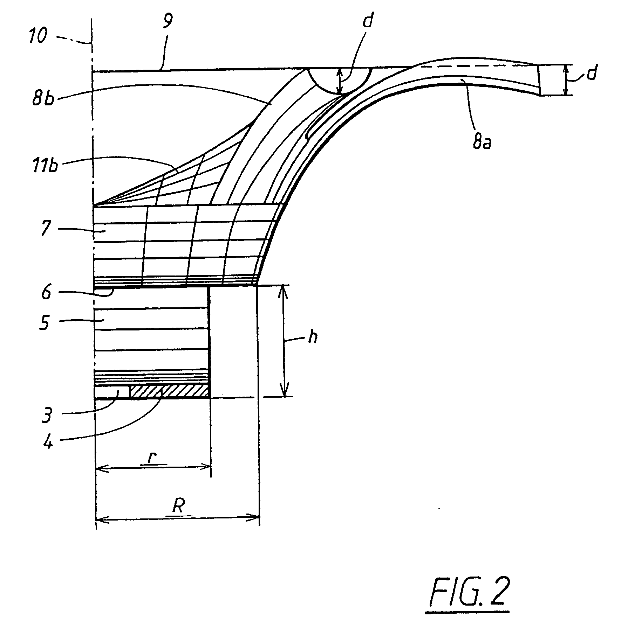

In Figure 2, a side view of half the steering-wheel 1 is shown, in which a plane 10 extends along the axis of symmetry running through the steering-wheel 1 and its steering column (not shown in Figure 2). In the figure, the most important parameters to be observed for dimensioning the steering-wheel 1 according to the invention, are illustrated. If it is assumed that the hub 4 is circular, the figure shows that the hub 4 has a specified radius r, calculated from the centre of the hole 3 provided for fixing the steering column. Furthermore, the lower part 5 of the shell has a specified height h, i.e. calculated from the hub 4 up to the ledge 6. In addition, the upper part 7 of the shell has a specified radius R at its lower edge calculated from the centre of hole 3.

Figure 2 shows that spokes 8a, 8b are gently curved in the direction from the upper part 6 of the shell to the rim 9 of the steering-wheel. Furthermore, spokes 8a, 8b both have a cross section which is bowl-shaped or curved, i.e. a cross section which is essentially U-shaped along its length from the steering-wheel rim 9 to the upper part 7 of the shell. The shape of this cross section can be defined by depth d for each spoke 8a, 8b. The depth d can also vary along the length of each spoke 8a, 8b. By suitable choice of the geometry and thickness of shell parts 5,7 and of spokes 8a, 8b, a steering-wheel structure with very rigid spokes 8a, 8b is obtained. When force is exerted in the event of a collision, the steering-wheel 1 is deformed at the ledge 6, so that the upper part 7 of the shell bends relative to the lower part 5 of the shell. Spokes 8a, 8b are deformed insignificantly in the event of such force. In this way, the steering-wheel 1 provides for effective energy absorption if the driver in the vehicle in question is thrown forwards against the steering-wheel.

The steering-wheel 1 can be given a uniform energy absorption capability i.e. so that the energy absorption by the steering-wheel 1 follows a similar sequence irrespective of whether the steering wheel 1 has been turned, which can be the case if a collision occurs while taking a bend, or not. In particular, this uniform energy absorption can be obtained if the hub 4 is given an essentially circular shape as seen from above.

As shown in Figures 1 and 2, the steering-wheel 1 comprises reinforcing members 11a, 11b which extend between the upper spoke 8a and the lower spoke 8b respectively. Reinforcement members 11a, 11b form integrated parts of the shell, more precisely described, in the form of extensions of the upper part 7 of the shell which merge with the respective spokes 8a, 8b.

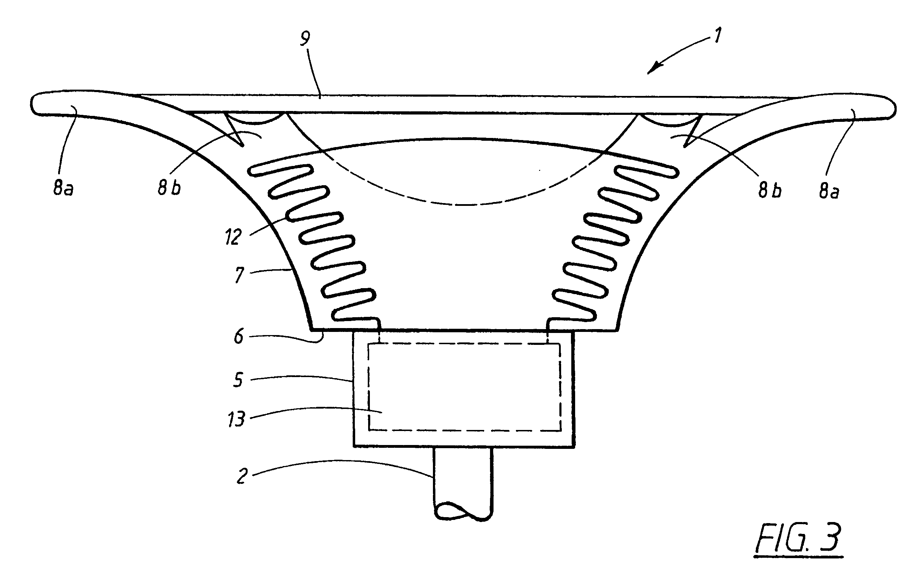

A side view of an arrangement according to the invention is shown in Figure 3, comprising a steering-wheel 1, which accommodates the components associated with a safety system which comprises an inflatable airbag 12. In addition to the airbag 12, the steering-wheel 1 accommodates an inflating device 13, which preferably consists of a gas generator which is arranged to inflate the airbag 12 in the event of a collision. According to what is already known, the gas generator 13 is for this purpose connected to an acceleration sensor (not shown) which in a known way is arranged to detect when there is an abnormally strong retardation of the vehicle. If this is the case, the acceleration sensor sends a signal to the gas generator 13, which in turn is activated so that the airbag 12 is inflated.

An underlying principle on which the present invention is based is that the airbag 12 and the gas generator 13 are arranged in the steering-wheel 1 so that the bowl-shaped element, which is defined by the shell parts 5,7 and the ledge 6, forms a casing or an enclosure for the airbag 12 and the gas generator 13. More precisely, the wall sections 5, 6, 7 of the bowl-shaped element form, at least partly, a part of the gas generator 13. In this way, an effective utilization of the space in the steering-wheel 1 and a low weight of the steering-wheel 1 itself are provided.

The invention is also based on the principle that the airbag 12 in its inactive, non-inflated state is arranged in such a way that the major part of its mass is distributed along the inner side of the periphery of the bowl-shaped element which is formed by the upper part 7 of the shell. By means of such a distribution of mass, the weight distribution of the steering-wheel 1 results in a relatively large portion of its total mass being positioned along its outer periphery. In this way, a relatively high moment of inertia is obtained in the steering-wheel 1. This leads to a reduced sensitivity to vibrations which, for example, can occur due to torsion oscillations in the steering system. Such oscillations can in turn occur due to extant wheel imbalance and unevenness in the road surface. An increase in the moment of inertia also results in a reduction in the torsion natural frequency $f_T$ of the steering-wheel 1. The torsion natural frequency $f_T$ of the steering-wheel 1 can be described in a somewhat simplified way by the following equation:

$$f_T = (1/2\pi) \times \sqrt{k_T/I}$$

where $k_T$ is the torsional rigidity of the steering column and the steering-wheel, and $I$ is the combined moment of inertia of the steering column and the steering-wheel. With a suitable combination of materials, dimensions and weight distribution for the arrangement according to the invention, the torsion natural frequency $f_T$ can be reduced to a value where it does not coincide with other expected vibration frequencies in the vehicle and thus does not interact with such possible vibrations, for example vibrations from the wheels. In this way, a high degree of comfort for the driver of the vehicle is obtained, since the vibrations and perturbations in the steering-wheel 1 can be reduced to a minimum.

According to the invention and according to what is shown in Figure 3, the abovementioned distribution of the major part of the mass of the airbag 12 along the rim of the steering-wheel 1 is obtained by a suitable folding of the airbag 12 when it is packed into the steering-wheel 1.

It can be noted that a relatively low moment of inertia I contributes to a relatively "lively" feel for the driver while driving the vehicle, while a relatively high moment of inertia I gives a higher degree of "confidence" and comfort for the driver. With the abovementioned weight distribution and dimensioning of the steering-wheel 1, the airbag 12 and the gas generator 13, the moment of inertia I of the steering-wheel 1 and the steering column 2 can be set within a predetermined range, so that an optimal balancing of the driver's driving enjoyment is obtained.

Another parameter which is preferably balanced according to the invention is the bending natural frequency $f_B$ of the steering-wheel. This is described in a somewhat simplified way by the following equation:

$$f_B = (1/2\pi) \times \sqrt{k_B/m_R}$$

where $k_B$ is the flexural rigidity of the steering column and $m_R$ is made up of a "vibrating mass" which can be said to consist of the mass of the steering-wheel 1 and the mass of the part of the steering column 2 situated closest to the steering-wheel 1. By means of the reduction in weight achieved according to the invention by accommodating the airbag 12 and the gas generator 13 in the bowl-shaped element 5, 6, 7, an increase in the bending natural frequency $f_B$ is thereby obtained. This is an advantage since the bending natural frequency $f_B$ can be allowed to exceed, with a good margin, the frequencies where perturbations in the form of vibrations and similar can be expected to occur in the vehicle.

The construction of the steering-wheel according to the invention is based on a cone-shaped component which narrows in the direction towards the steering column 2. This component is modified to suit, on the one hand the desired appearance of the finished steering-wheel 1, and on the other hand its desired properties. According to the invention, the steering-wheel 1 is preferably dimensioned so that it is given as high a lowest natural frequency as possible, while minimizing the weight of the completed steering-wheel 1. By careful balancing of the dimensions of the steering-wheel 1, a lowest natural frequency which exceeds a relatively high minimum value, which for example can be set at 60 Hz, is obtained. In this way, a safe margin is achieved to the frequency at which disturbances occur, which can for example be 40 Hz.

The fact that the rim 9 of the steering-wheel is intended to be covered with fitted padding e.g. in the form of foam, also affects the natural frequency of the complete steering-wheel 1. When the steering-wheel foam is applied to the steering-wheel, the natural frequency is reduced, which in turn is due to an increase in the total mass of the steering-wheel 1. Furthermore, it is the rim 9 of the steering-wheel which is the part which affects the natural frequency the most, due to the fact that it can be regarded as a mass and the shell parts 5,7 can be regarded as a spring with a certain rigidity. The selection of the dimensions of the steering-wheel 1 is based on the fact that the natural frequency for a ring with a certain mass, material and dimensions can be calculated from known formulae, in which the ring's natural frequency is proportional to $(m_R)^{-\frac{1}{2}}$, where $m_R$ is the mass of the ring. Thus, a lightweight steering-wheel rim 9 is affected more when steering-wheel foam is added than a heavier steering-wheel rim, since the total mass increases more as a percentage for a lightweight steering-wheel rim than for a heavier steering-wheel rim. The natural frequency is also affected by the material of the steering-wheel rim, i.e. depending on whether a steering-wheel rim 9 of steel or aluminium is chosen.

Furthermore, the steering-wheel 1 must be dimensioned according to the requirements laid out concerning torsional strength, static strength, collision strength and weight. For example, there may be a requirement that under a maximum load which is applied somewhere along the steering wheel rim 9 (and which corresponds to the load which a person needs to apply to get into or out of the car with the help of the steering-wheel) the deformation shall not exceed a specified limit value. Also, with regard to the torsional strength of the steering-wheel 1, there are normally requirements for the steering-wheel 1 to withstand a specified limit value for the turning moment, which corresponds to the steering-wheel 1 not being turned and broken during a possible attempted theft.

The invention is not limited to the exemplary embodiments described above and shown in the figures, but can be varied within the scope of the following patent claims. For example, the steering-wheel 1 can be used for different types of vehicle, e.g. cars and lorries. In addition, the number of spokes can be varied. In addition, the steering-wheel can be manufactured from several different materials e.g. steel, aluminium magnesium, titanium or composites.

In order to obtain the desired weight distribution, the airbag 12 can preferably be folded in such a way that the major part of its mass is positioned along the inner periphery of the said bowl-shaped element. In principle, this weight distribution can also be achieved by the choice of the wall thickness of the bowl-shaped element 5, 6, 7.

Furthermore, the two shell parts 5, 7 can merge into each other without any ledge 6 extending in the radial direction being used. This requires the two radii r and R mentioned above (see Figure 2) to be of essentially the same size.

According to the invention, the steering-wheel 1 is especially intended to be manufactured by casting the whole shell including the spokes 8a, 8b and the steering-wheel rim 9 as a single item. However, the steering-wheel rim 9 can alternatively be fitted to the spokes 8a, 8b by means of casting it securely as in conventional casting methods.

**Claims**

1. Arrangement for a vehicle steering-wheel (1) comprising a hub (4) for fixing to a steering column (2), a bowl-shaped element (5, 6, 7) connected to the hub (4) with at least one spoke (8) which connects the said bowl-shaped element (5, 6, 7) to a steering-wheel rim (9), the hub (4), the bowl-shaped element (5, 6, 7) and the spoke (8) being integrally formed as a single material item, wherein the said bowl-shaped element (5, 6 ,7) constitutes a casing which encloses an airbag (12) and a means (13) for inflating the airbag (12) in the event of a collision involving the vehicle, **characterized in that** it comprises a wall section (5, 6) of the said bowl-shaped element (5, 6, 7) forming, at least partly, a part of the said means (13) for inflating the airbag (12).

2. Arrangement according to claim 1, **characterized in that** the airbag (12) is arranged so that a major part of its mass extends along the inner periphery of the said bowl-shaped element (5, 6, 7).

3. Arrangement according to claim 2, **characterized in that** it is formed with a weight distribution and dimensions of the steering-wheel (1), airbag (12) and said means (13) for inflating the airbag (12) which correspond to a torsion natural frequency ($f_T$) and a bending natural frequency ($f_B$) which are set in order to minimize mechanical perturbations in the steering-wheel (1).

4. Arrangement according to any of the preceding claims, **characterized in that** the said bowl-shaped element (5, 6, 7) is essentially conical and comprises a lower shell part (5) and an upper shell part (7), the upper shell part (7) having larger outer dimensions than the lower shell part (5) and the shell parts (5,7) being connected by a ledge (6) extending essentially in the radial direction relative to the longitudinal axis of the steering column (2).

5. Arrangement according to any of the preceding claims, **characterized in that** it includes at least two spokes (8a, 8b) which are connected by a reinforcing element (11) which constitutes an extension of, and is an integrated part of, the said bowl-shaped element (5, 6, 7).

6. Arrangement according to any of the preceding claims, **characterized in that** it includes a steering-wheel rim (9) which is integrally formed with said at least one spoke (8).

7. Arrangement according to any of the preceding claims, **characterized in that** it is formed as an integrated unit by casting.

**Patentansprüche**

1. Anordnung für ein Kraftfahrzeuglenkrad (1) mit einer Nabe (4), welche an einer Lenkstange (2) befestigt ist; einem schalenförmigen Element (5, 6, 7), welches mit der Nabe (4) verbunden ist, mit wenigstens einer Speiche (8), welche das schalenförmige Element (5, 6, 7) mit einem Lenkradrand (9) verbindet; wobei die Nabe (4), das schalenförmige Element (5, 6, 7) und die Speiche (8) einteilig als einzelnes Materialstück gebildet sind; wobei das schalenförmige Element (5, 6, 7) ein Gehäuse bildet, welches einen Airbag (12) und Mittel (13) zum Füllen des Airbags (12) im Falle einer Kollision des Kraftfahrzeuges enthält,
**gekennzeichnet durch**
einen Wandabschnitt (5, 6) des schalenförmigen Elementes (5, 6, 7), welcher zumindestens teilweise einen Abschnitt des Mittels (13) zum Füllen des Airbags (12) bildet.

2. Anordnung nach Anspruch 1, **dadurch gekennzeichnet, dass** der Airbag (12) derart angeordnet ist, dass sich ein Hauptteil seiner Masse entlang des inneren Umfangs des schalenförmigen Elementes (5, 6, 7) erstreckt.

3. Anordnung nach Anspruch 2, **dadurch gekennzeichnet, dass** die Anordnung mit einer Gewichtsverteilung und Abmessungen des Lenkrads (1), des Airbags (12) und des Mittels (13) zum Füllen des Airbags (12) gebildet ist, welche einer natürlichen Drehfrequenz ($f_T$) und einer natürlichen Biegefrequenz ($f_B$) entsprechen, welche zum Minimieren der mechanischen Störungen in dem Lenkrad (1) festgesetzt sind.

4. Anordnung nach wenigstens einem der vorhergehenden Ansprüche, **dadurch gekennzeichnet, dass** das schalenförmige Element (5, 6, 7) im Wesentlichen konisch ausgebildet ist und einen unteren Gehäuseabschnitt (5), und einen oberen Gehäuseabschnitt (7) aufweist, wobei der obere Gehäuseabschnitt (7) größere Abmessungen besitzt als der untere Gehäuseabschnitt (5) und wobei die Gehäuseabschnitte (5, 7) durch eine Leiste (6) verbunden sind, welche sich im Wesentlichen in radialer Richtung in Bezug auf die Längsachse der Lenkstange (2) erstreckt.

5. Anordnung nach wenigstens einem der vorhergehenden Ansprüche, **dadurch gekennzeichnet, dass** die Anordnung wenigstens zwei Speichen (8a, 8b) aufweist, welche durch ein Verstärkungselement (11) verbunden sind, welches eine Verlängerung des schalenförmigen Elementes (5, 6, 7) bildet und einen integrierten Abschnitt des schalenförmigen Elementes (5, 6, 7) darstellt.

6. Anordnung nach wenigstens einem der vorhergehenden Ansprüche, **dadurch gekennzeichnet, dass** die Anordnung einen Lenkradrand (9) aufweist, welcher einteilig mit wenigstens einer Speiche (8) ausgebildet ist.

7. Anordnung nach wenigstens einem der vorhergehenden Ansprüche, **dadurch gekennzeichnet, dass** die Anordnung als integrierte Einheit durch ein Gussverfahren gebildet ist.

**Revendications**

1. Agencement pour un volant de direction (1) d'un véhicule, comprenant un moyeu (4) pour la fixation sur une colonne de direction (2), un élément en forme de coupe (5, 6, 7) connecté au moyeu (4), avec au moins un rayon (8) qui connecte ledit élément en forme de coupe (5, 6, 7) à une jante (9) du volant de direction, le moyeu (4), l'élément en forme de coupe (5, 6, 7) et le rayon (8) étant intégralement formés comme un article en matériau unique, dans lequel ledit élément en forme de coupe (5, 6, 7) constitue un boîtier qui enferme un airbag (12) et des moyens (12) pour gonfler l'airbag (12) dans le cas d'une collision impliquant le véhicule, **caractérisé en ce qu'**il comprend un tronçon de paroi (5, 6) dudit élément en forme de coupe (5, 6, 7) qui forme au moins partiellement une partie desdits moyens (13) pour gonfler l'airbag (12).

2. Agencement selon la revendication 1, **caractérisé en ce que** l'airbag (12) est ainsi agencé qu'une partie majeure de sa masse s'étend le long de la périphérie intérieure dudit élément en forme de coupe (5, 6, 7).

3. Agencement selon la revendication 2, **caractérisé en ce qu'**il est formé avec une distribution pondérale et des dimensions du volant (1), de l'airbag (12), et desdits moyens (13) pour gonfler l'airbag (12), qui correspondent à une fréquence naturelle de torsion ($f_T$) et une fréquence naturelle de flexion ($f_B$) qui sont choisies afin de minimiser les perturbations mécaniques dans le volant (1).

4. Agencement selon l'une quelconque des revendications précédentes, **caractérisé en ce que** ledit élément en forme de coupe (5, 6, 7) est essentiellement conique comprend une partie de coque inférieure (5) et une partie de coque supérieure (7), la partie de coque supérieure (7) ayant des dimensions extérieures supérieures à la partie de coque inférieure (5) et les parties de coque (5, 7) étant connectées par un rebord (6) qui s'étend essentiellement dans la direction radiale par rapport à l'axe longitudinal de la colonne de direction (2).

5. Agencement selon l'une quelconque des revendications précédentes, **caractérisé en ce qu'**il inclut au moins deux rayons (8a, 8b) qui sont connectés par un élément de renfort (11) qui constitue une extension dudit élément en forme de coupe (5, 6, 7) et qui fait partie intégrante de celui-ci.

6. Agencement selon l'une quelconque des revendications précédentes, **caractérisé en ce qu'**il inclut une jante de volant (9) qui est formée de manière intégrale avec ledit au moins un rayon (8).

7. Agencement selon l'une quelconque des revendications précédentes, **caractérisé en ce qu'**il est formé comme une unité intégrée par fonderie.

FIG.1.

*FIG.2*

FIG. 3